# EUROPEAN PATENT APPLICATION

(11) **EP 1 313 053 A1**
(43) Date of publication of application: **21.05.2003**
(21) Application number: 02257787.8
(22) Date of filing: 11.11.2002
(51) Int. Cl.: G06F 17/60

(54) **Position bidding in a pay for placement search system**

(30) Priority: 13.11.2001 US 993926
(71) Applicant: Overture Services, Inc., Pasadena, CA 91103 (US)
(72) Inventor: Cheung, Dominic D., South Pasadena, California 91030 (US); Graham, Gabriel, Pasadena, California 91103 (US); Snell, Scott W., Hollywood, California 90068 (US); Lang, Alan E., Redondo Beach, California 90278 (US); Bove, Jane C., Redondo Beache, California 90278 (US); Maritato, Frank Jr., Pasadena, California 91107 (US); Davis, Darren J., Rowland Heights, California 91748 (US)
(74) Representative: McLeish, Nicholas Alistair Maxwell

(57) **Abstract**

A method for a pay for placement database search system includes storing one or more search listings associated with an advertiser, each search listing including a respective bid amount and receiving a bid cap for selected search listings. The respective bid amounts are adjusted for the selected search listings according to the bid cap.

## Description

### RELATED APPLICATIONS

This application is related to application serial number 09/922,028 entitled SYSTEM AND METHOD FOR PROVIDING PLACE AND PRICE PROTECTION IN A SEARCH RESULT LIST GENERATED BY A COMPUTER NETWORK SEARCH ENGINE, filed on August 3, 2001 in the names Cheung, et al., which is a continuation in part of application serial number 09/911,674 filed July 24, 2001 in the names of Darren J. Davis, et al., (attorney docket number 9623/334), which application is incorporated herein in its entirety and which is a continuation of application serial number 09/322,677, filed May 28, 1999, in the names of Darren J. Davis, et al., now U.S. patent number 6,269,361.

### BACKGROUND

The Internet provides many databases of information accessible for searching and receiving information. Pay for placement database search systems have been developed in which advertisers bid on the placement of their listings in search results returned to a searcher in response to a world wide web query from a searcher. Each advertiser's listing includes a search term and a bid amount. In some embodiments, each advertiser's listing includes a title, descriptive text and a clickable hyperlink or uniform resource locator (URL). The database of search listings stores many such listings, each associated with an advertiser. Upon receipt of the query, the database is searched and listings having a search term matching the query are formatted for display to the searcher as search results.

The advertisers adjust their bids or bid amounts to control the position at which their search listings are presented in the search results. The pay for placement system places search listings having higher-valued bids higher or closer to the top of the search listings. Other rules may be applied as well when positioning search listings. For example, a more senior listing will be positioned or ranked higher than a junior listing for the same search term and same bid. Higher-ranked listings are seen by more searchers and are more likely to be clicked, producing traffic of potential customers to an advertiser's web site.

The searcher is presented with search listings according to the bid amounts. The search listings may extend over several screens or pages when formatted for viewing. As a result, higher positioned search listings are much more likely to be seen by the searcher. Moreover, some pay for placement systems have affiliate agreements whereby some of their highest-bidded search listings are presented to searchers using other general purpose search engines. Because of these affiliate agreements and similar arrangements, an advertiser's web site, if bid highly enough, may be seen by as many as seventy-five percent of Internet users.

An advertiser wishing to attract searchers to his web site as potential customers for the advertiser's goods and services thus has an incentive to position his search listing relatively high in the search results. An advertiser may enter bids on many search listings. For search listings which are closely related to the content of the advertiser's web site, the advertiser might place relatively large bids. For less closely related search listings, the advertiser might place smaller bids. A number of strategies have been developed by advertisers to increase traffic to advertiser web sites in this manner.

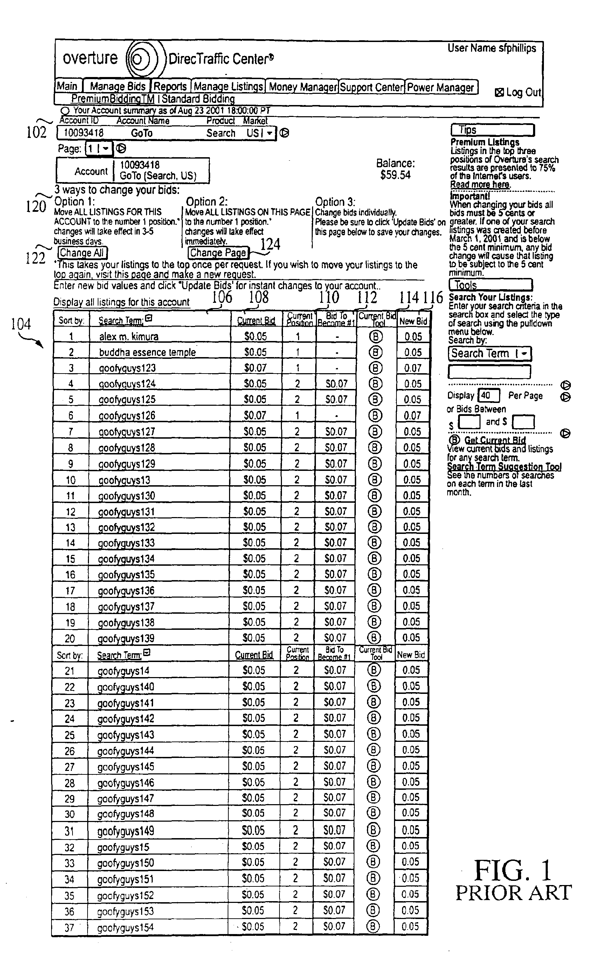

Similarly, pay for placement search systems have developed tools to help the advertisers manage their bids and attract traffic. Overture Services, Inc., operating a system at www.overture.com, has presented advertisers with a standard bidding page accessible over the world wide web. An example of this page is shown in FIG. 1, which shows a portion of a standard bidding page for a current pay for placement search system. The standard bidding page allows an advertiser to log in, display and edit all current search listings and review bids. Thus, the standard bidding page in FIG. 1 includes a display 102 of account information and a display 104 of current bid information.

The display 104 of current bid information in the illustrated example is arranged in a table including several fields. Among these is a search term field 106, a current bid field 108, a current position field 110, a bid to become number 1 field 112, a current bid tool selector field 114 and a new bid field 116. The search term field 106 displays in one column of the table all of the search terms on which the advertiser has bid. These are the terms with which search queries are compared to determine a match for presentation to a searcher. The current bid field 108 shows the current amount bid on the search term. In the illustrated example, five cents or $0.05 is the minimum bid the system will currently accept, with smaller bids below the minimum bid amount grandfathered at that bid amount until changed. The current position field 110 shows the current position or rank at which the search listing will be presented to a searcher if a search query including that search term is received. A rank or current position of 1 means that search listing will be displayed first to a searcher. The bid to become number 1 field 112 shows the amount the advertiser must bid to have the search listing appear at the top of the list of search results, or in the number 1 or first ranked position. The current bid tool field 114 includes a hyperlink that redirects the advertiser's browser to a URL at which the advertiser can see all bids by all advertisers for that search term, so that the advertiser can better manage his bid. The new bid field 116 allows the advertiser to enter a new bid for a search term. The system will accept the new bid and update the search listing accordingly.

The control field 120 presents other bid management options. A change all hyperlink 122 allows all listings for the advertiser's account to be moved to the number 1 bid position. A change page hyperlink 124 allows all listings shown on the current page for the advertiser to be moved to the number 1 bid position. By guaranteeing a highest ranked position for all or many bids, these tools are effective at allowing an advertiser to maximize the traffic to the advertiser's web site.

The standard bidding page of the type has proved very successful at allowing advertisers to manage their bids. However, as the system has become more successful, some advertisers have started to maintain very large numbers of bids. Some advertisers are known to have bid on thousands of search terms. Also, more advertisers are bidding on the same search term, increasing the likelihood that an advertiser's updated search listing will be subsequently displaced from the desired position by a second advertiser updating the second advertiser's listings. Further, an advertiser may desire to be among the highest-bidded search listings which are presented to searchers using other general purpose search engines. However, the option to place all search listings or pages of search listings in the highest bidded position may be too successful at generating traffic, also increasing the cost of maintaining the search listings to unmanageable levels.

One currently available web site allows a user to designate a selected position or rank for an advertisers keywords. However, this conventional system allows only a single keyword to be processed and does not handle tie situations well, in which multiple bids exist for the same keywords at the same dollar amount.

Accordingly, there is a need for an improved system and method for managing bids in a pay for placement system.

### BRIEF SUMMARY

By way of introduction only, the present embodiments provide a method and system for a pay for placement database search system. The method and system include storing one or more search listings associated with an advertiser, each search listing including a respective bid amount and receiving a bid cap for selected search listings. The respective bid amounts are adjusted for the selected search listings according to the bid cap.

The foregoing discussion of the preferred embodiments has been provided only by way of introduction. Nothing in this section should be taken as a limitation of the claims, which define the scope of the invention.

### BRIEF DESCRIPTION OF SEVERAL VIEWS OF THE DRAWINGS

FIG. 1 shows a portion of a standard bidding page for a current pay for placement search system;
FIG. 2 is a block diagram of a pay for placement database search system;
FIG. 3 is a flow diagram illustrating a bid to position method for a pay for placement database search system such as the exemplary system of FIG. 2;
FIG. 4 is a flow diagram illustrating processing of exception conditions in the method of FIG. 3;
FIG. 5 is a state diagram showing operation of the system of FIG. 2 and
FIG. 6 shows one embodiment of a change bids page for bid to position control.

### DETAILED DESCRIPTION OF THE PRESENTLY PREFERRED EMBODIMENTS

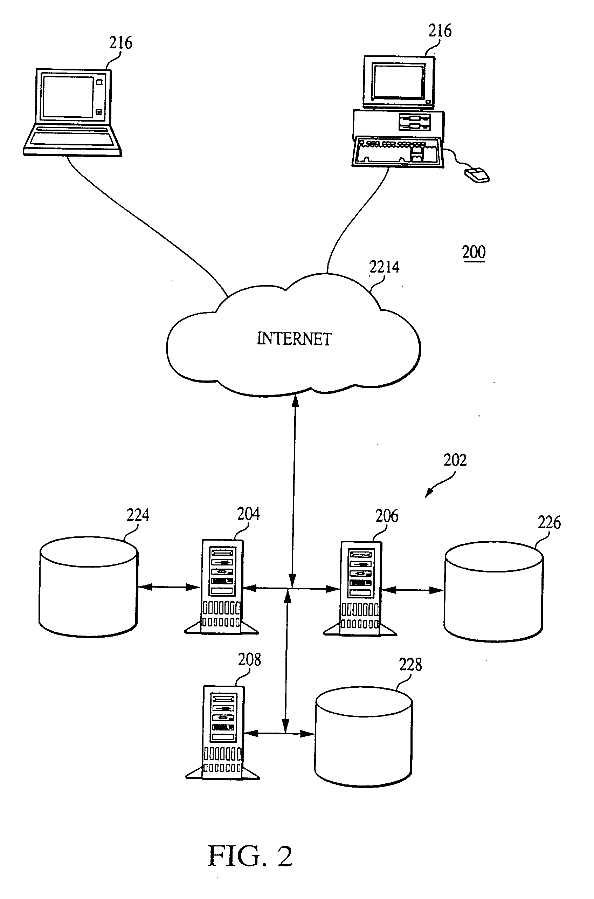

Referring now to the drawing, FIG. 2 is a block diagram of a pay-for-placement search system 200. FIG. 2 is an example of a distributed system 200 configured as client/server architecture used in one embodiment of the present invention. A client is a member of a class or group that uses the services of another class or group to which it is not related. A server is typically a remote computer system that is accessible over a communications medium such as the Internet. The client process may be active in a second computer system, and communicate with the server process over a communications medium that allows multiple clients to take advantage of the information-gathering capabilities of the server. Thus, the server essentially acts as an information provider for a computer network.

The block diagram of FIG. 2 therefore shows a distributed system 200 including a plurality of advertiser web servers 204 and associated database 224, an account management server 206 and associated database 226, and a search engine web server 208 and associated database 228, and a plurality of client computers 216 such as a searcher computer and an advertiser computer, all of which are connected to a network such as the Internet 214. The network 214 will be hereinafter generally referred to as the Internet. Although the system and method of the present invention is specifically useful for the Internet, it should be understood that the client computers 216, advertiser web servers 204, account management server 206, and search engine web server 208 may be connected together through one of a number of different types of networks. Such networks may include local area networks (LANs), other wide area networks (WANs), and regional networks accessed over telephone lines, such as commercial information services. The client and server processes may even comprise different programs executing simultaneously on a single computer. Advertiser web server 204, account management server 206, and search engine web server 208 and their associated storage device comprise a pay-for-placement database search system 202 as described herein.

The client computers 216 can be conventional personal computers (PCs), workstations, or computer systems of any other size. Each client 216 typically includes one or more processors, memories, input/output devices, and a network interface, such as a conventional modem or network interface card. The advertiser web servers 204, account management server 206, and the search engine web server 208 can be similarly configured. However, advertiser web servers 204, account management server 206, and search engine web server 208 may each include many computers connected by a separate private network.

The client computers 216 can execute web browser programs, such as the NAVIGATOR, EXPLORER, or MOSAIC browser programs, to locate the web pages or records stored on advertiser server 204. The browser programs allow the users to enter addresses of specific web pages to be retrieved. These addresses are referred to as Uniform Resource Locators, or URLs. In addition, once a page has been retrieved, the browser programs can provide access to other pages or records when the user "clicks" on hyperlinks to other web pages. Such hyperlinks are located within the web pages 30 and provide an automated way for the user to enter the URL of another page and to retrieve that page. The pages can be data records including as content plain textual information, or more complex digitally encoded multimedia content, such as software programs, graphics, audio signals, videos, and so forth.

In one embodiment, client computers 216 communicate through the network with various network information providers, including account management server 206, search engine server 208, and advertiser servers 204 using the functionality provided by a HyperText Transfer Protocol (HTTP), although other communications protocols, such as FTP, SNMP, TELNET, and a number of other protocols known in the art, may be used. Preferably, search engine server 208, account management server 206, and advertiser servers 204 are located on the World Wide Web.

As discussed above, at least two types of server are contemplated in the illustrated embodiment. The first server contemplated is an account management server 206 comprising a computer storage medium 220 and a processing system. A database is stored on the storage medium 220 of the account management server 206. The database contains advertiser account information. It will be appreciated from the description below that the system and method described herein may be implemented in software that is stored as executable instructions on a computer storage medium, such as memories or mass storage devices, on the account management server 206. Conventional browser programs, running on client computers 216, may be used to access advertiser account information stored on account management server 206. Preferably, access to the account management server 206 is accomplished through a firewall, not shown, which protects the account management and search result placement programs and the account information from external tampering. Additional security may be provided via enhancements to the standard communications protocols such as Secure HTTP or the Secure Sockets Layer.

The second server type contemplated is a search engine web server 208. A search engine program permits network users, upon navigating to the search engine web server URL or sites on other web servers capable of submitting queries to the search engine web server 208 through their browser program, to type keyword queries to identify pages of interest among the millions of pages available on the World Wide Web. In a preferred embodiment of the present invention, the search engine web server 208 generates a search result list that includes, at least in part, relevant entries obtained from and formatted by the results of the bidding process conducted by the account management server 206. The search engine web server 208 generates a list of hypertext links to documents that contain information relevant to search terms entered by the user at the client computer 216. The search engine web server transmits this list, in the form of a web page, to the network user, where it is displayed on the browser running on the client computer 216. One embodiment of the search engine web server may be found by navigating to the web page at URL http://www.overture.com/.

Search engine web server 208 is connected to the Internet 214. In one embodiment, search engine web server 208 includes a search database including search listing records used to generate search results in response to user queries. In addition, search engine web server 208 may also be connected to the account management server 206. Account management server 206 may also be connected to the Internet 214. The search engine web server 208 and the account management server 206 address the different information needs of the users located at client computers 216.

For example, one class of users located at client computers 216 may be network information providers such as advertising web site promoters or advertisers having advertiser web pages located on advertiser web servers 204. These advertising web site promoters or advertisers may wish to access account information residing in storage on account management server 206. An advertising web site promoter may, through the account residing on the account management server 206, participate in a competitive bidding process with other advertisers. An advertiser may bid on any number of search terms relevant to the content of the advertiser's web site. In one embodiment, the relevance of a bidded search term to an advertiser's web site is determined through a manual editorial process prior to insertion of the search listing containing the search term and advertiser web site URL into the database. In an alternate embodiment of the present invention, the relevance of a bidded search term in a search listing to the corresponding web site may be evaluated using a computer program executing at the processor of account management server 206, where the computer program will evaluate the search term and corresponding web site according to a set of predefined editorial rules.

The higher bids receive more advantageous placement on the search result list page generated by the search engine 208 when a search using the search term bid on by the advertiser is executed. In one embodiment, the amount bid by an advertiser comprises a money amount that is deducted from the account of the advertiser for each time the advertiser's web site is accessed via a hyperlink on the search result list page. Alternatively, the amount bit may comprise any economic value given by the advertiser. A searcher clicks on the hyperlink with a computer input device to initiate a retrieval request to retrieve the information associated with the advertiser's hyperlink. Preferably, each access or click on a search result list hyperlink will be redirected to the search engine web server 208 to associate the "click" with the account identifier for an advertiser. This redirect action, which is not apparent to the searcher, will access account identification information coded into the search result page before accessing the advertiser's URL using the search result list hyperlink clicked on by the searcher. The account identification information is recorded in the advertiser's account along with information from the retrieval request as a retrieval request event. Since the information obtained through this mechanism conclusively matches an account identifier with a URL in a manner not possible using conventional server system logs known in the art, accurate account debit records will be maintained. The advertiser's web site description and hyperlink on the search result list page is accompanied by an indication that the advertiser's listing is a paid listing. Each paid listing displays a cost to advertiser, which is an amount corresponding to a price-per-click paid by the advertiser for each referral to the advertiser's site through the search result list.

A second class of users at client computers 216 may comprise searchers seeking specific information on the web. The searchers may access, through their browsers, a search engine web page residing on web server 208. The search engine web page includes a query box in which a searcher may type a search term comprising one or more keywords. Alternatively, the searcher may query the search engine web server 208 through a query box hyperlinked to the search engine web server 208 and located on a web page stored at a remote web server. When the searcher has finished entering the search term, the searcher may transmit the query to the search engine web server 208 by clicking on a provided hyperlink. The search engine web server 208 will then generate a search result list page and transmit this page to the searcher at the client computer 216.

The searcher may click on the hypertext links associated with each listing on the search results page to access the corresponding web pages. The hypertext links may access web pages anywhere on the Internet 214, and include paid listings to advertiser web pages located on advertiser web servers 204. In one embodiment, the search result list also includes non-paid listings that are not placed as a result of advertiser bids and are generated by a conventional World Wide Web search engine, such as the INKTOMI, LYCOS, or YAHOO! search engines. The non-paid hypertext links may also include links manually indexed into the database by an editorial team. Most preferably, the non-paid listings follow the paid advertiser listings on the search results page.

In another embodiment, the users at client computers 216 may access the web site of other web service providers affiliated with the operator of the pay for placement search system 200. Under affiliate agreements, search queries entered by the users at the client computers 216 using web pages of the affiliated web service providers are also passed to the search engine web server 208. The search engine web server 208 produces pay for placement search results as described herein. Some of the pay for placement search results are passed back to the user at the client computer and combined with other search results to form query results. Under an affiliate agreement, the pay for placement search results may be positioned in any suitable location in the query results. If the user clicks on one of the pay for placement search results, economic value is generated for the pay for placement search system 200 or for the affiliated web service provider, or both.

Preferably, from the perspective of the operator of the pay for placement search system 200, under the affiliate agreement the pay for placement search results are positioned or ranked near or at the top of the query results sent to the user. Search listings treated this way are referred to as premium listings. In one example, the premium listings are the top three search listings for a search term and are passed to the affiliated web service provider and displayed in the top three positions of the query results. A premium listing has an increased likelihood of being clicked by the user. In this manner, an advertiser's premium search listing will be seen by a larger number of searchers using the World Wide Web, increasing the traffic to the advertiser's web site. This increases the incentive for the advertiser to submit bids to position the advertiser's search listings as premium search listings, with a rank or position which will ensure display near the top of the query results.

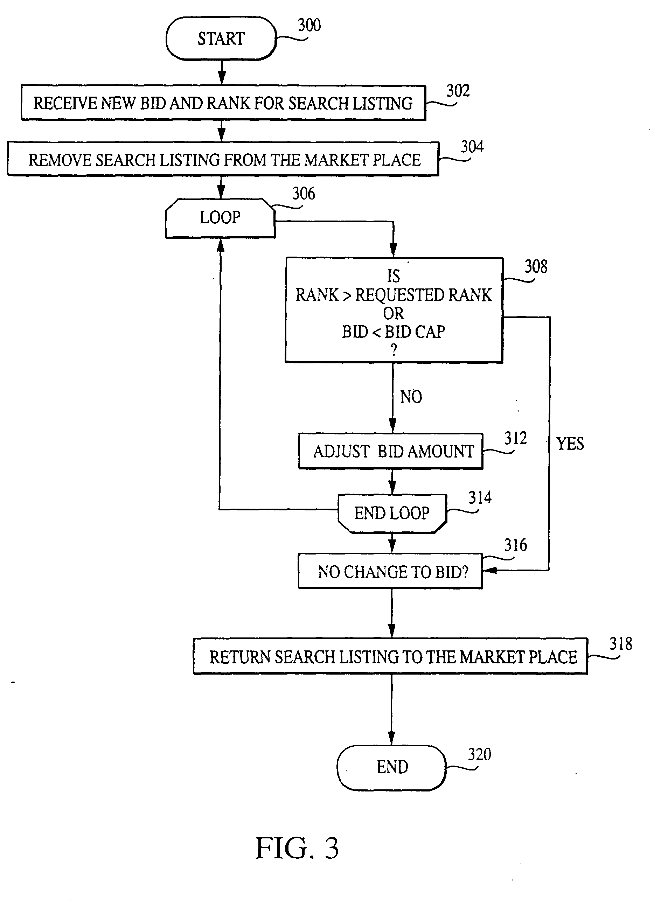

FIG. 3 is a flow diagram illustrating a bid to position method for a pay for placement database search system such as the exemplary system 200 of FIG. 2. In the exemplary system, advertisers may specify a bid cap and a desired rank for one or more search listings. The bid cap is the maximum dollar amount at which the bid of a search listing may be set by the system. Bid amounts less than or equal to the bid cap are acceptable. The desired rank is limited to one of the ranks corresponding to the premium listings, which in the exemplary system are rank 1, rank 2 and rank 3 or the first three search listings displayed to a user. Also, the exemplary system has policies that search listings are ranked by bid amount and search listings with identical bid amounts or tie conditions are resolved with a senior or earlier placed bid being ranked higher than junior listings. Further in the exemplary system, some listings are referred to as grandfathered. The system has a current minimum bid amount of $0.05 but some listings were created before the minimum was applied and have bid amounts less that the minimum. Under current policy, if a bid is changed for a grandfathered listing, the minimum bid of $0.05 applies.

In one embodiment, the method of FIG. 3 and the system of FIG. 2 implement bid change logic which may be summarized by the following rules:
1. We will place you at the position you requested, at the lowest price possible.
2. If there are ties that make your requested position unavailable, we will make your new bid $0.01 more than the tie amount and you will be right on top of the ties. This means you might get a position higher than you requested.
3. Your new bid will never be higher than your bid cap, if specified. If your requested position cannot be obtained because your bid cap is too low, we will get you the best position for your bid cap. Often that means that your new bid will be equal to your bid cap, but if we can get that same position for a lower price, we will give you the lower price.
4. Your new bid will never be lower than the minimum bid of $0.05. This means that if you use position bidding on a grandfathered listing, you will lose grandfather status for that listing.
These rules are exemplary only. Other rules may be devised and applied as well.

Examples of the application of these rules are shown below. In these examples, original rank and bid amounts are shown for several search listings which all specify the same search term. When a query containing this search term is received from a user, these listings will be presented in the query results to the user in rank order according to bid amount. Under an affiliate agreement, the top three ranked listings are premium listings and will be presented in query results for queries received from affiliated web service providers.

Example 1. In the first example, an advertiser with an old rank of 5 at a bid amount of $0.90 requests a rank of 2 and specifies a bid cap of $1.50. Based on the existing bids and the rules, the new rank is 2 and the bid amount is $1.00. Thus, the system receives the bid cap and the desired rank for selected search listings adjusts respective bid amounts for the selected search listings according to the bid cap and the desired rank. In this particular embodiment, a bubble popping process is applied to reduce the bid amount from the specified amount or the bid cap to a bid amount which is just high enough to achieve the desired rank.

| Example 1: No problems. Give the rank requested. | | | | | |
|---|---|---|---|---|---|
| **Rank Original State** | | **B2P** | | **Rank Final State** | |
| 1 | $1.00 | Old Rank | 5 | 1 | $1.00 |
| 2 | $0.99 | Old Bid | $0.90 | 2 | **$1.00** |
| 3 | $0.98 | | | 3 | $0.99 |
| 4 | $0.92 | Rank Requested | 2 | 4 | $0.98 |
| 5 | **$0.90** | Bid Cap | $1.50 | 5 | $0.92 |
| 6 | $0.80 | New Rank | 2 | 6 | $0.80 |
| | | New Bid | $1.00 | | |
| | | Status | Success | | |

Example 2. In the second example, an advertiser with an old rank of 5 at a bid amount of $0.90 requests a rank of 2 and specifies a bid cap of $1.50. However, this time, a tie condition exists in that two listings with bid amounts of $1.00 are ranked first and second. Applying the rules above, since the tie condition makes the requested rank of 2 unavailable, the system adjusts the new bid by increasing the bid amount $0.01 more than the tie amount, placing the search listing in the first ranked position.

| Example 2: Tie forces the new rank to be higher than requested. | | | | | |
|---|---|---|---|---|---|
| **Rank Original State** | | **B2P** | | **Rank Final State** | |
| 1 | $1.00 | Old Rank | 5 | 1 | **$1.01** |
| 2 | $1.00 | Old Bid | $0.90 | 2 | $1.00 |
| 3 | $0.98 | | | 3 | $1.00 |
| 4 | $0.92 | Rank Requested | 2 | 4 | $0.98 |
| 5 | **$0.90** | Bid Cap | $1.50 | 5 | $0.92 |
| 6 | $0.80 | | | 6 | $0.80 |
| | | New Rank | 1 | | |
| | | New Bid | $1.01 | | |
| | | Status | Partial Success | | |

Example 3. In the third example, an advertiser with an old rank of 5 at a bid amount of $0.90 requests a rank of 2 and specifies a bid cap of $0.95. In this example, with other search listings at ranks 1, 2 and 3 at bids of $1.00, $0.99 and $0.98, respectively the bid cap of $0.95 forces the search listing to a new rank that is lower than the requested rank.

| Example 3: Bid cap forces the new rank to be lower than requested. | | | | | |
|---|---|---|---|---|---|
| **Rank Original State** | | **B2P** | | **Rank Final State** | |
| 1 | $1.00 | Old Rank | 5 | 1 | $1.00 |
| 2 | $0.99 | Old Bid | $0.90 | 2 | $0.99 |
| 3 | $0.98 | | | 3 | $0.98 |
| 4 | $0.92 | Rank Requested | 2 | 4 | **$0.93** |
| 5 | **$0.90** | Bid Cap | $0.95 | 5 | $0.92 |
| 6 | $0.80 | | | 6 | $0.80 |
| | | New Rank | 4 | | |
| | | New Bid | $0.93 | | |
| | | Status | Partial Success | | |

Example 4. In the fourth example, an advertiser with an old rank of 2 at a bid amount of $0.99 requests a rank of 4 and specifies a bid cap of $0.90. In this example, the bid cap of $0.90 forces the new rank to be lower than the requested rank of 4, but the obtained position of rank 5 is the best position attainable given the bid cap. Applying the bubble popping method, the bid amount is lowered to $0.81, the minimum amount needed to be at the best possible rank for the bid cap.

| Example 4: Bid cap forces the new rank to be lower than requested. Bubble popping drops the price further. | | | | | |
|---|---|---|---|---|---|
| **Rank Original State** | | **B2P** | | **Rank Final State** | |
| 1 | $1.00 | Old Rank | 2 | 1 | $1.00 |
| 2 | **$0.99** | Old Bid | $0.99 | 2 | $0.98 |
| 3 | $0.98 | | | 3 | $0.95 |
| 4 | $0.92 | Rank Requested | 4 | 4 | $0.92 |
| 5 | $0.90 | Bid Cap | $0.90 | 5 | **$0.81** |
| 6 | $0.80 | | | 6 | $0.80 |
| | | New Rank | 5 | | |
| | | New Bid | $0.81 | | |
| | | Status | Partial Success | | |

Example 5. In the fifth example, an advertiser with an old rank of 5 at a bid amount of $0.90 requests a rank of 2 and specifies a bid cap of $1.00. However, in this example a tie condition exists in that the search listings ranked 1 and 2 each have a bid of $1.00. Because of the bid cap, however, the new rank is lower than the old rank. The result is that the new rank is 3, less than the requested rank of 2.

| Example 5: Bid cap and ties force the new rank to be lower than requested when bidding up | | | | | |
|---|---|---|---|---|---|
| **Rank Original State** | | **B2P** | | **Rank Final State** | |
| 1 | $1.00 | Old Rank | 5 | 1 | $1.00 |
| 2 | $1.00 | Old Bid | $0.90 | 2 | $1.00 |
| 3 | $0.98 | | | 3 | **$0.99** |
| 4 | $0.92 | Rank Requested | 2 | 4 | $0.98 |
| 5 | **$0.90** | Bid Cap | $1.00 | 5 | $0.92 |
| 6 | $0.90 | | | 6 | $0.90 |
| | | New Rank | 3 | | |
| | | New Bid | $0.99 | | |
| | | Status | Partial Success | | |

Example 6. In the sixth example, an advertiser with an old rank of 2 at a bid amount of $1.00 requests a rank of 4 and specifies a bid cap of $0.92. However, in this example a tie condition exists in that the search listings ranked 4 and 5 each have a bid of $0.92. The result is that the new rank is 5, below the requested rank of 4. The bid cap and the tie condition for the new rank to be lower than the requested rank.

| Bid cap and ties force the new rank to be lower than requested when bidding down. | | | | | |
|---|---|---|---|---|---|
| **Rank Original** | **State** | **B2P** | | **Rank Final** | **State** |
| 1 | $1.00 | Old Rank | 2 | 1 | $1.00 |
| 2 | **$1.00** | Old Bid | $1.00 | 2 | $0.98 |
| 3 | $0.98 | | | 3 | $0.92 |
| 4 | $0.92 | Rank Requested | 4 | 4 | $0.92 |
| 5 | $0.92 | Bid Cap | $0.92 | 5 | **$0.91** |
| 6 | $0.90 | | | 6 | $0.90 |
| | | New Rank | 5 | | |
| | | New Bid | $0.91 | | |
| | | Status | Partial Success | | |

In one embodiment, in order to provide more favorable results for advertisers, there are some exceptions to these rules. The exceptions are set out below.
a) If, after applying the rules, your new bid comes out to be the same as your old bid, we will make no change. This way you retain your seniority position at that bid.
b) If your new bid is higher than your old bid but your rank is not improved, we will not change your bid. That way you don't get charged more for no improvement in rank.
c) If it turns out that your new rank takes you further down in the listings from your requested rank than where you were with your old rank, then we will not change your bid. Of course, your old bid has to be under your bid cap for this to happen.
d) If your new rank turns out to be worse than the rank you requested because there is a block of tied bids and if your listing was in the block of tied bids, then we won't make a change. This happens when you request to be moved lower in the listings but there is a block of ties between your old rank and your requested rank. If we made a change, you would end up just under the block of ties, possibly far below where you requested, which is undesirable.
e) If you use position bidding on a grandfathered listing and if the new rank comes out to be better than the rank you requested, then we won't make a change. We do this to protect your grandfathered listing.
These exceptions to the above rules are exemplary only. Other exceptions may be devised and applied as well.

Examples of the application of these rules are shown below.

Example 7. In this example, advertiser C uses requests rank 1 with a bid cap of $0.80. The bid cap is not high enough, so the new bid will be increased to the bid cap. However this is equal to the old bid, so no change is needed. The final state is unchanged from the initial state.

| Example 7 | | |
|---|---|---|
| **Position** | **Advertiser** | **Bid** |
| 1. | A | 1.00 |
| 2. | B | 0.80 |
| 3. | C | 0.80 |
| 4. | D | 0.80 |
| 5. | E | 0.80 |
| 6. | F | 0.75 |

Example 8. In this example, advertiser B uses the system to request rank #1 with a bid cap of $1.00. The normal processing would grant rank #2 with a bid of $0.81. However, there is no rank improvement and with the new bid the advertiser is paying more. Therefore, the system does nothing since the requested rank could not be granted.

| Example 8 | | |
|---|---|---|
| **Position** | **Advertiser** | **Bid** |
| 1. | A | 1.00 |
| 2. | B | 0.80 |
| 3. | C | 0.80 |
| 4. | D | 0.80 |
| 5. | E | 0.80 |
| 6. | F | 0.75 |

Example 9. In this example, advertiser C uses the system to request rank 2 with a bid cap of $0.80. The normal processing would grant rank 5 with a bid of -$0.76. However, this is an undesirable result because the advertiser gets a new rank that is lower than the one he had and lower than the one he requested. Therefore the system will do nothing.

| Example 9 | | |
|---|---|---|
| **Position** | **Advertiser** | **Bid** |
| 1. | A | 1.00 |
| 2. | B | 0.80 |
| 3. | C | 0.80 |
| 4. | D | 0.80 |
| 5. | E | 0.80 |
| 6. | F | 0.75 |

Example 10. In this example, advertiser B uses the system to request rank 3 with a bid cap of $0.80. It is impossible to grant either rank 3 or 4. They are unavailable due to a tie condition. It is undesirable to move the advertiser to rank 5 at $0.76. Therefore the system will do nothing, so the final position is rank 2 at $0.80, the same position and bid that advertiser B had to start with. In this case, the advertiser gets a higher rank than he requested. If advertiser B uses the system to request rank 3 with a bid cap of $0.79, the final result will be rank 5 at $0.76.

| Example 10 | | |
|---|---|---|
| **Position** | **Advertiser** | **Bid** |
| 1. | A | 1.00 |
| 2. | B | 0.80 |
| 3. | C | 0.80 |
| 4. | D | 0.80 |
| 5. | E | 0.80 |
| 6. | F | 0.75 |

Example 11. In this example, advertiser D uses the system to request rank 3 with a bid cap of $0.05. According to the normal processing, the system would award rank 2 with a new bid of $0.05. However, the advertiser gets a rank higher than requested and loses the grandfather status, which is undesirable, so the system does nothing. If advertiser D uses the system to request rank 1 with a bid cap of $0.05, then according to normal processing, we would grant rank 2 with a new bid of $0.05. In this case we make the change and declare partial success because the new rank is lower than the requested rank.

| Example 11 | | |
|---|---|---|
| **Position** | **Advertiser** | **Bid** |
| 1. | A | 0.05 |
| 2. | B | 0.04 |
| 3. | C | 0.03 |
| 4. | D | 0.02 |

The flow diagram of FIG. 3, illustrating the rules described above, is described below. The method of the embodiment of FIG. 3 begins at block 300. At block 302, information is received from an advertiser. In one embodiment, the information is a new bid cap which is then used to adjust the bids of the advertiser. In another embodiment, the information received is a new desired rank which is then used to adjust the bids of the advertiser. In the embodiment shown in FIG. 3, the new information is both a new desired rank and a bid cap which are then used to adjust the bids of the advertiser. The new information is for a single selected search listing, a group of selected search listings or all search listings associated with the advertiser's account. At block 304, the selected search listing is removed from the market place, for example by moving the search listing from the search engine web server 208 of FIG. 2 to another storage location. The prevents use of the search listings while data is being updated.

Control enters a loop beginning at block 306. A first search listing for the search term is processed. At block 308, it is determined if the current rank is greater than the requested rank or if the current bid amount is less than the bid cap. If so, the loop is exited and control proceeds to block 316.

If the test of block 308 is not satisfied, at bloc 312 the bid amount for the selected search listing is adjusted. Normally, the bid amount is increased. In applying bubble popping, the bid is decreased. At block 314, control returns to block 306 and a next search listing for the specified search term is selected for processing.

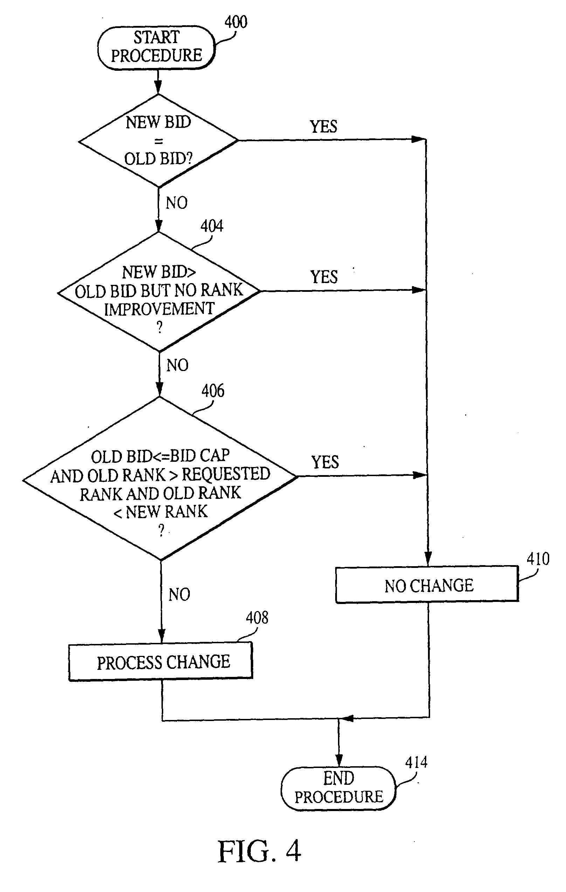

The loop is exited and control proceeds to block 316 after all search listings for the specified search term have been processed. At block 316, exceptions to the bid change rules are tested. An exemplary embodiment of this exception processing is described below in conjunction with FIG. 4. During processing of block 316, it is determined if no change to the bid amount for the selected search listing should be entered because of the existence of an exception condition. If no exception condition exists, the bid is changed as determined in processing in the loop of FIG. 3. At block 318, the search listing is returned from temporary storage to the market place database for use by the search engine responding to queries. The method ends at block 320.

FIG. 4 is a flow diagram illustrating processing of exception conditions in the method of FIG. 3. The embodiment begins at block 400. At block 402, it is determined if the new bid amount determined during the processing of FIG. 3 is equal to the old bid for the same search listing. If so, control proceeds to block 410. If not, at block 404, it is determined if the new bid determined for the search listing is equal to the old bid but yields no rank improvement for the search listing. If so, control proceeds to block 410.

If not, at block 406 several conditions are checked. First, it is determined if the unadjusted bid is less than or equal to the advertiser-specified bid cap. Second, it is determined if the unadjusted rank is greater or higher than the requested rank. Third, it is determined if the unadjusted rank is less than the new rank determined in the loop of FIG. 3. If all these conditions are met, control passes to block 410.

At block 408, if none of the exception conditions of blocks 402, 404, 406 have been met, the bid amount change determined by the looping operation of FIG. 3 is processed. The bid amounts for the selected search listings are adjusted according to the received bid cap and desired rank.

If any of the exception conditions of blocks 402, 404, 406 have been met, at block 410 no change is made to the search listing. The exception handling method of FIG. 4 ends at block 414 and control returns to block 318 of FIG. 3.

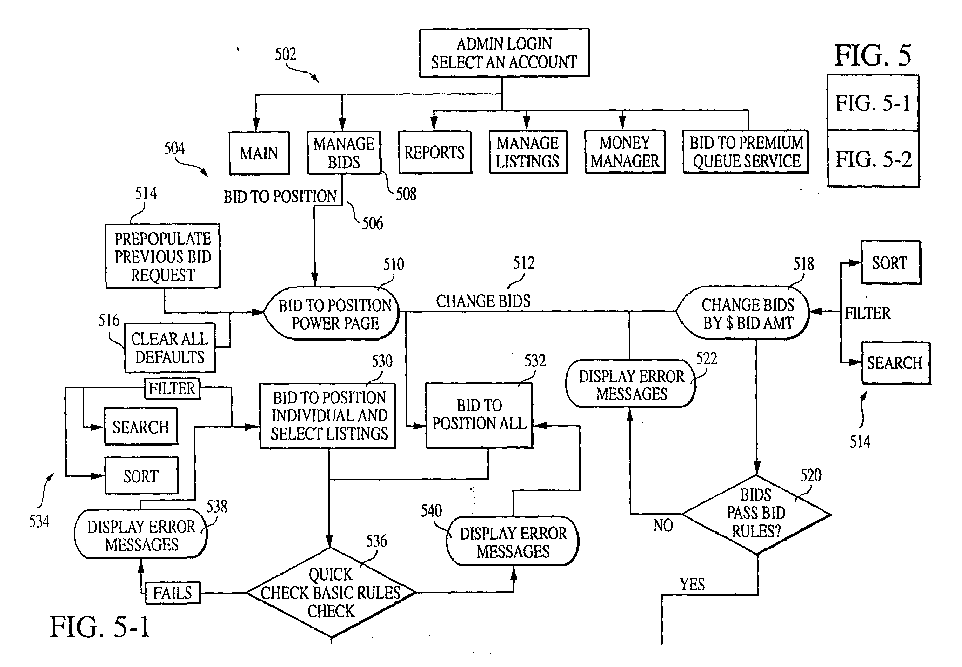

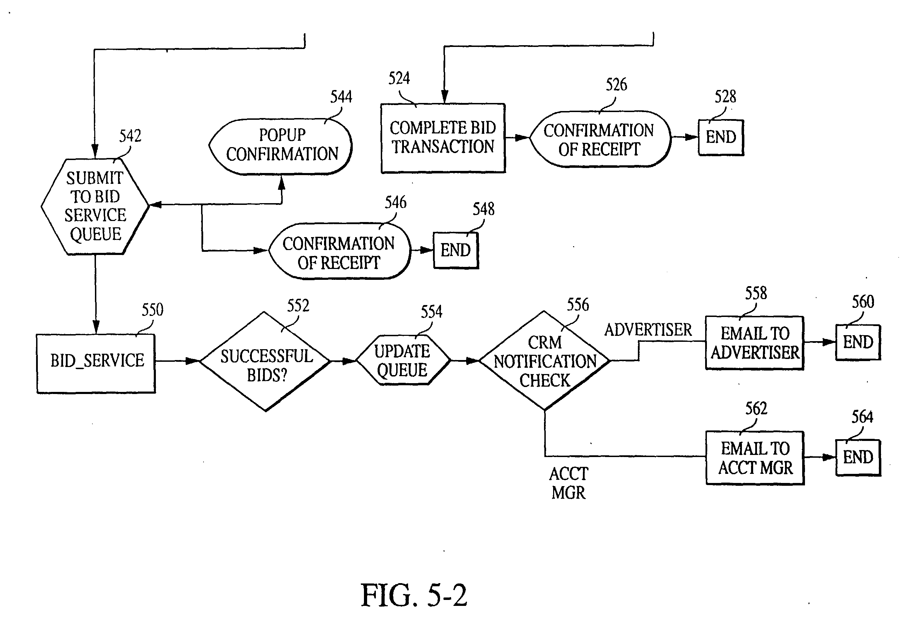

FIG. 5 shows a state diagram 500 illustrating operation of a bid to position function in the pay for placement system of FIG. 2. In FIG. 5, the blocks correspond to operating states of the system and the labeled links correspond to clicked hyperlinks.

The state diagram 500 includes an access portion 502 and a bid to position portion 504. Each of the blocks in FIG. 5 corresponds to a block of code and stored data for performing the described functions. The access portion 502 provides several administrative functions such as secure login, reporting operations and others. By selecting a "bid to position" link 506 of a Manage Bids window 508 accessed by an advertiser's web browser. Selecting this link 506 redirects the advertiser's browser to a bid to position control page 510 of the bid to position portion 504. The bid to position control page 510 provides advertiser control of the bid to position operation of the system. The bid to position control page 510 allows the user bid to position control of one or more search listings.

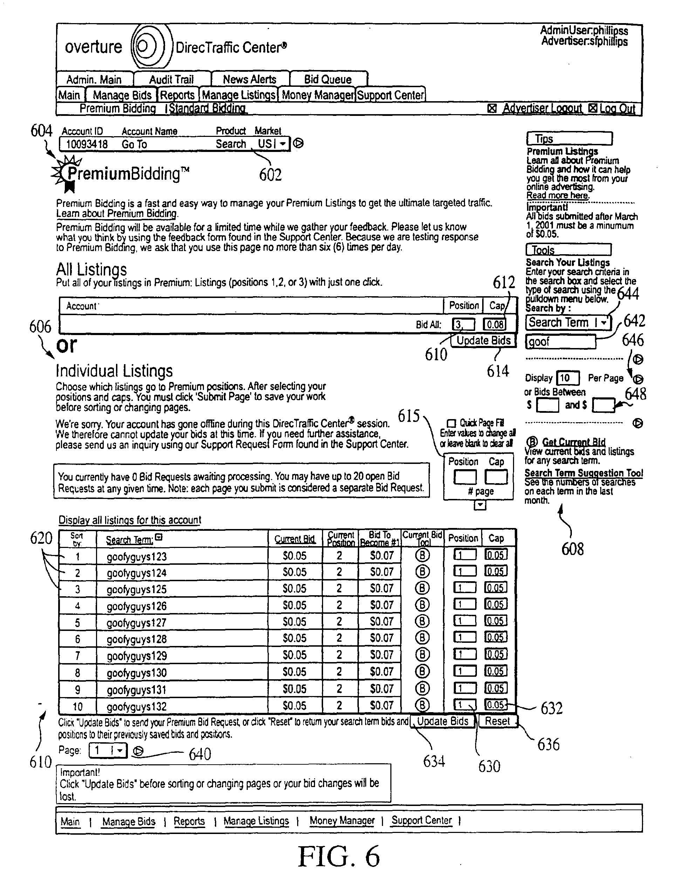

One embodiment of the bid to position control page 510 is shown in FIG. 6. The page 510 includes an account identification window 602, an all listings bidding section 604, an individual listings section 606 and a search control section 608. The account identification window 602 displays account identification information for the advertiser and serves as a text input box for receiving new account identification information if the advertiser chooses to change accounts.

The all listing bidding section 604 includes a desired rank text entry window 610 and a bid cap window 612 along with an update button 614. The all listings bidding section 604 may be used by the advertiser to change all of the advertiser's bids on all search listings of the advertiser to the desired rank entered in the desired rank text entry window 610 at the bid cap entered in the bid cap window 612. Upon actuation of the update button 614, the system updates all the bids to the advertiser's desired rank according to the desired rank and the bid cap. Preferably, the rules and exceptions specified herein are used in this updating process. Other rule sets may be used however.

The individual listings section 606 includes an individual listings update portion 610 and a quick page fill portion 615. The individual listings update portion 610 includes a grid showing all of the advertiser's listings 620 under the selected account, current bid windows 622, current position windows 624, bid to become number 1 windows 626, a current bid tool 628, desired rank text entry window 630 and a bid cap window 632 along with an update button 634 and a reset button 636. Thus, for each search listing 620, the grid shows the advertiser's current bid amount in a current bid window 622, the advertiser's current position relative to other search listings for the same search term, in the current position windows 624, and the bid amount required to achieve the number one rank in the bid to become number 1 window 626. The current bid tool 628 is a hyperlink which redirects the user's browser to a web page showing some or all current bids for the search term and allowing the advertiser to adjust his bid to achieve any desired rank among the listed search listings.

The desired rank text entry window 630 and the bid cap window 632, along with an update button 634, operate similarly to the analogous structures of the all listings portion 604. A desired rank may be entered in the desired rank text entry window 630 for one or more search listings and a bid cap may be entered in the bid cap window 632. Upon actuation of the update button 634, the system updates the respective bid amounts for the selected search listings to the advertiser's desired rank according to the desired rank and the bid cap. Upon actuation of the reset button 636, the entries in the desired rank text entry window 630 and the bid cap window 632 are cleared.

The quick page fill portion 615 allows an advertiser to specify bid caps and desired rank values for all search listings currently shown on the page. These operate similarly to the analogous structures of the all listings portion 604 and the individual listings portion 606. A page control button 640 allows the advertiser to select a page of listings for viewing.

The search control section 608 allows the advertiser to control what search listings are displayed on a page. The search control section 608 includes a search text entry window 642, search type selector 644, display control 646 and bid search entry windows 648. The search text entry window 642 is configured to receive text defining a search query, such as a search term or other text which may appear in the advertiser's search listings. The search type selector 644 allows the advertiser to specify the type of search or field of his search listings to be searched, such as the search term, the title, the URL, etc. Search listings having matching text in the specified field will be displayed on the page after a search is performed. The display control 646 allows the advertiser to control how many search listings are displayed in the grid on any page. This can be important when using the quick page fill operation to bid to position a page full of search listings. The bid search entry windows 648 are configured to receive text defining upper and lower bounds for bid amounts in search listings. Search listings having bid amounts within the specified range will be displayed on the page after a search is performed.

Referring again to FIG. 5, a populate with previous bids functionality 514 retrieves stored bids to position information for display in the grid of the bid to position control page 510. Each time desired ranks or bid caps are submitted for one or more search listings, this information is stored. The functionality 514 retrieves the stored data and populates the grid with the retrieved information. This is a user convenience feature, eliminating the need for the advertiser to separately record this information. A clear defaults functionality 516 is also provided to erase the stored information.

A change bids page 518 and an associated search and sort functionality 514 are accessible by clicking a change bids link 512. The change bids page 518 performs the bid change algorithm according to bid changes specified by the advertiser. The search and sort functionality may be implemented by any suitable search engine or searching and sorting code. After processing the bids according to the specified changes, a check is performed at a block 520. If error conditions exist, an error message is provided, block 522. If no errors exist, the bid change process is completed, for example by verifying the changes with the advertiser and copying the modified search listings back into the active market place and, block 524. A confirmation message is sent to the advertiser, block 524 and the bid change process ends at block 528.

The bid to position operation is performed by bid to position individual functionality 530 and bid to position all functionality 532. The bid to position individual functionality 530 receives the text and click inputs from the individual listings section 606 (FIG. 6) of the bid to position control page 510. Associated with the bid to position individual functionality 530 is a search and sort functionality 534, which performs searching and sorting of an advertiser's search listings in accordance with the search control section 608 (FIG. 6).

Similarly, bid to position all functionality 532 receives the text and click inputs from the all listings bidding section 604 of the bid to position control page 510. The bid to position individual functionality 530 and the bid to position all functionality 532 operate to adjust the bid amounts according to the received desired rank information and the bid cap information.

In either case, a rules check is performed, block 536 to ensure that the received bid caps and desired ranks conform to the rules. For example, in the present embodiment, an advertiser may only specify as a desired rank the ranks 1, 2 or 3 of the search listings. Any other specified desired rank will generate an error. If an error occurs, an error message will be displayed for the advertiser, block 538, block 540, and the advertiser will have a chance to resubmit the bid to position request.

If the rule check of block 534 is passed, the bid to position request is submitted to a bid service queue, block 542. A confirmation of the advertiser's input is provided, either a popup confirmation in the form of a window displaying the changed information or by mailing an electronic mail confirmation of receipt, block 546, after which the confirmation process ends at block 548.

At block 550, the bid queue operates to update the listings of the advertiser. The bid queue is implemented because updating each bid takes a finite amount of time and many bids for position may be submitted in a short time frame. For example, if an advertiser with hundreds or thousands of bids performs a bid to position all operation, block 532, processing all bids may take several seconds or longer. Rather than freeze the screen of the advertiser's web browser, by submitting the bids to be modified to a bid queue the advertiser is free to attend to other details. Similarly, other advertisers who submit bids while a large number of bid updates are occurring are also freed for other processing. The bid queue of block 550 provides additional features as well. If an advertise submits additional updates to any bid for which a change has been requested but which is still sitting in the queue, the second-submitted bid change will overwrite the first-submitted change. This may allow an advertiser to delete a mistakenly submitted bid which can be advantageous since grandfathered bids will lose their grandfather status upon change.

At block 552, it is determined if the bids were successfully changed. If so, at block 554, the bid queue is updated by removing changed bids from the queue and advancing still pending bids.

Once the bid or bids have been changed, a bid change notification operation begins at block 556. A notification is electronically mailed to the advertiser, block 558, and the operation ends at block 560. If the advertiser has an account manager associated with the bid for placement database operator who manages the advertiser's account, a notification may also be emailed to the account manager, block 562. Processing ends at block 564.

From the foregoing, it can be seen that the present invention provides method and apparatus which allows a user to designate a selected position or rank for an advertiser search listings. The user specifies information such as a bid cap and a desired rank for selected search listings. The system applies bid change logic and, where appropriate, adjusts the bid amount for the selected search listings to move the search listing to the desired rank. Preferably, the desired rank is limited to a premium position at or near the top of search results to be presented to a searcher.

While a particular embodiment of the present invention has been shown and described, modifications may be made. For example, rules and exceptions have been described for use by the system in implementing bid change logic. Any other suitable rules or exception conditions may be substituted to tailor the operation of the system and method according to particular requirements. It is therefore intended in the appended claims to cover such changes and modifications, which follow in the true spirit and scope of the invention.

## Claims

1. A method for a pay for placement database search system, the method comprising:
storing one or more search listings associated with an advertiser, each search listing including a respective bid amount;
receiving a bid cap for selected search listings; and
adjusting the respective bid amounts for the selected search listings according to the bid cap.

2. The method of claim 1 wherein adjusting the respective bid amounts comprises:
increasing the respective bids so long as each respective bid does not exceed the bid cap.

3. The method of claim 1 further comprising:
receiving a desired rank for the selected search listings; and
adjusting the respective bid amounts for the selected search listings according to the desired rank.

4. The method of claim 3 further comprising:
if a tie condition makes a desired rank unavailable for a respective search listing, incrementing a bid amount for the respective search listing.

5. The method of claim 3 wherein adjusting the respective bid amounts comprises:
if the desired rank for a selected search listing can not be obtained because of the bid cap, increasing a bid amount for the selected search listing so the bid amount does not exceed the bid cap to position the selected search listing at a best attainable rank.

6. The method of claim 4 wherein adjusting the respective bid amounts further comprises:
reducing the bid amount to a minimum bid necessary to retain the best attainable rank for the selected search listing.

7. The method of claim 3 wherein adjusting the respective bid amounts comprises:
reducing the respective bid amounts only if the reduced bid amount exceeds a system minimum bid.

8. The method of claim 3 wherein adjusting respective bid amounts comprises:
if an adjusted bid amount for a selected search listing produces no bid change, leaving the bid amount unadjusted.

9. The method of claim 3 wherein adjusting respective bid amounts comprises:
if processing an adjusted bid amount for a selected search listing produces no rank change, leaving the bid amount unadjusted.

10. The method of claim 3 wherein adjusting respective bid amounts comprises:
if processing a requested rank to a higher requested rank produces a rank change to a rank below an initial rank, leaving the bid amount unadjusted.

11. The method of claim 10 wherein adjusting respective bid amounts further comprises:
leaving the bid amount unadjusted only if the bid amount required for the initial rank does not exceed the bid cap.

12. The method of claim 3 wherein adjusting respective bid amounts comprises:
if adjusting the respective bid amounts produces an adjusted rank that is below the requested rank because of a tie condition, leaving the bid amount unadjusted.

13. The method of claim 3 wherein adjusting respective bid amounts comprises:
if a selected search listing is a grandfathered search listing and if adjusting the respective bid amount for the grandfathered search listing produces an adjusted rank that exceeds the desired rank, leaving the bid amount unadjusted.

14. The method of claim 3 further comprising:
providing an error indicating if the desired rank is not within a permitted range of desired ranks.

15. The method of claim 3 further comprising:
providing an error indicating if the desired rank is not a rank equal to rank 1, rank 2 or rank 3.

16. The method of claim 1 further comprising:
receiving a desired rank for all search listings of an advertiser; and
adjusting the respective bid amounts for all search listings according to the desired rank and the bid cap.

17. The method of claim 1 further comprising:
receiving a desired rank for a displayed page of search listings of an advertiser; and
adjusting the respective bid amounts for search listings on the displayed page according to the desired rank and the bid cap.

18. The method of claim 1 further comprising:
providing a confirmation of the received bid cap.

19. The method of claim 1 further comprising:
providing a notification after adjusting the respective bid amounts.

20. A database search system comprising:
a database configured to store search listings associated with one or more advertisers, each search listing including a respective bid amount;
first program code to produce an advertiser access page;
second program code to update one or more listings of the database in response to a desired rank and bid cap received from an advertiser using the advertiser access page.

21. The database search system of claim 19 wherein the first program code is configured to display a page of search listings associated with an advertiser including a first text box and a second text box for each displayed search listing, the first text box to receive data corresponding to the desired rank for a search listing and the second text box to receive data corresponding to the bid cap for the search listing.

22. The database search system of claim 19 wherein the first program code is further configured to display a first page fill text box and a second page fill text box, the first page text box to receive data corresponding to the desired rank for all search listings displayed on the page and the second page fill text box to receive data corresponding to the bid cap for all search listings displayed on the page.
